# EUROPÄISCHE PATENTSCHRIFT

(11) **EP 1 336 470 B1**
(45) Veröffentlichungstag und Bekanntmachung des Hinweises auf die Patenterteilung: **15.08.2007**
(21) Anmeldenummer: 03001432.8
(22) Anmeldetag: 22.01.2003
(51) Int. Cl.: B32B 5/26, B32B 5/28, B32B 3/10

(54) **Konstruktionselement aus faserverstärktem Kunststoff**
Construction element made of fiber reinforced plastic
Elément de construction en matière plastique renforcée de fibres

(30) Priorität: 14.02.2002 DE 10205965
(43) Veröffentlichungstag der Anmeldung: 20.08.2003
(73) Patentinhaber: DaimlerChrysler AG, 70327 Stuttgart (DE)
(72) Erfinder: Erb, Thiemo, 70182 Stuttgart (DE); Kim, Patrick, Dr., 70329 Stuttgart (DE); Koschmieder, Martin, 70180 Stuttgart (DE)

(56) Entgegenhaltungen:
- EP-A- 1 029 658
- DE-A- 3 908 433
- PATENT ABSTRACTS OF JAPAN vol. 1996, no. 11, 29 November 1996 (1996-11-29) & JP 08 184126 A (MITSUBISHI HEAVY IND LTD), 16 July 1996 (1996-07-16)

## Beschreibung

Die Erfindung betrifft ein Konstruktionselement aus faserverstärktem Kunststoff nach Anspruch 1.

Faserverstärkte Kunststoffe (FVK), bekannt aus der Luft- und Raumfahrt, halten vermehrt Einzug als Konstruktionselemente im Automobilbau. Ursachen hierfür sind die gestiegene Notwendigkeit zum Leichtbau, die wiederum höhere Herstellungskosten rechtfertigen und andererseits Optimierungen im Herstellungsprozess von FVK-Materialien, durch die ebenfalls Kosten reduziert werden können.

Zum Aufbau von Konstruktionselementen aus FVK gibt es verschiedene Möglichkeiten, besonders verbreitet ist die sogenannte Sandwichbauweise. Hierbei wird ein Hohlprofil aus FVK mit einem Kern versehen oder um einen Kern herum aufgebaut. Dieser Kern besteht bevorzugt aus Schäumen oder Naturmaterialien wie Balsaholz. Die Kernmaterialien tragen hierbei wesentlich zur Steifigkeit des Bauteils bei.

Nachteile der Kernmaterialien sind zum einen die zusätzlichen Kosten und zum anderen die unzureichende Prozesstauglichkeit dieser Materialien bei der Herstellung von Fahrzeugrohbauten. Zur Beschichtung der metallischen Elemente des Rohbaus wird dieser bei ca. 190°C einer flüssigen Kathodentauchlackierung (KTL) unterzogen. FVK-Bauteile, die als Kern Schäume oder Holz aufweisen, sind hierfür nur schlecht geeignet. Schäume neigen bei diesen Temperaturen zum Nachschäumen, Holz saugt sich mit der Lösung voll. Hochfeste Kohlenstofffaser-Bauteile führen zudem noch zu einer Kontaktkorrosion mit den umliegenden Metallbauteilen der Rohbaukonstruktion. DE 3508433 beschreibt ein Kraftfahrzeugdach, das mindestens eine kunstharzimprägnierte Glasfiberstrukturschicht, eine Abstandschicht aus Wellpappe, eine geschäumte Dämpfungschicht sowie eine Deck-oder Bezugschicht enthält.

Die Aufgabe der Erfindung besteht nun darin, ein Konstruktionselement aus FVK-Material bereitzustellen, dass eine hohe Schadenstoleranz und eine hohe Steifigkeit aufweist und für die Kathodentauchlackierung geeignet ist. Ferner darf durch das Konstruktionselement keine Kontaktkorrosion mit dem umgebenden Rohbau auftreten.

Das erfindungsgemäße Konstruktionselement nach Anspruch 1 weist einen mehrschichtigen Aufbau aus unterschiedlichen Fasertypen und Faserorientierungen auf. Hierzu gehören eine Innenschicht, eine Zwischenschicht und eine Außenschicht. Die Innenschicht umschließt einen weitgehend hohlen Kern. Die Zwischenschicht trägt insbesondere zur Festigkeit des Konstruktionselementes bei. Hierzu sind die Fasern in die bevorzugte Kraftrichtung, in der das Konstruktionselement belastet wird, orientiert. Die Außenschicht dient dazu, die abschließende Kontur des Konstruktionselementes zu gestalten, sie ist zudem mit elektrisch isolierenden Fasern gestaltet, wodurch Kontaktkorrosion mit den angrenzenden metallischen Konstruktionselementen des Rohbaus vermieden wird.

Durch den erfindungsgemäßen Aufbau des Konstruktionselementes kann auf ein Kernmaterial verzichtet werden, wobei dennoch die gleiche Festigkeit und Schadenstoleranz wie bei vergleichbaren Sandwichstrukturen gewährleistet ist. Zudem ist das Konstruktionselement für das KTL-Verfahren geeignet.

Die Innenschicht ist zweckmäßiger Weise durch einen oder mehrere Geflechtschläuche dargestellt. Mehrere Geflechtschläuche nebeneinander ergeben im Konstruktionselement einen wabenförmigen Querschnitt. Die Waben können in jeder beliebigen Form (n-Ecke oder rund) ausgestaltet sein und werden durch Stege begrenzt. Die Stege resultieren aus Berührungsflächen der Geflechtschläuche und tragen zur Festigkeit des Konstruktionselementes bei. Die Anzahl der Geflechtschläuche bzw. der resultierenden Waben beträgt bevorzugt zwischen 2 und 6, besonders bevorzugt zwischen 3 und 5.

Ist die Längsachse des Konstruktionselementes die Richtung mit einer hohen Krafteinleitung (Belastungsachse), so ist es zweckmäßig, wenn der Geflechtschlauch der Innenschicht einen Faseranteil entlang der Belastungsachse aufweist. In der Regel sind die Fasern des Geflechtschlauches in einem 60° Winkel zueinander angeordnet und laufen in einem 30°-Winkel zur Längsachse.

Die Fasern der Innenschicht sind bevorzugt Glasfasern. Diese sind kostengünstig und weisen eine hohe Dehnung auf, was sich positiv auf die Schadenstoleranz auswirkt.

Die Zwischenschicht hingegen ist bevorzugt durch Kohlenstofffasern oder Aramidfasern dargestellt. Diese weisen eine deutlich höhere Festigkeit als die Glasfasern der Innenschicht auf, die Kohlenstofffasern sind jedoch spröder als die Glasfasern.

Die Faserorientierung der Zwischenschicht weist eine Vorzugsrichtung entlang der höchsten Krafteinwirkung des Konstruktionselementes auf. Besonders bevorzugt ist die Faserorientierung unidirektional entlang einer Längsachse des Konstruktionselementes angeordnet.

Die Außenschicht wird wiederum wie die Innenschicht in zweckmäßiger Weise durch einen Geflechtschlauch ausgebildet. Dieser Geflechtschlauch umschließt die inneren Schichten und verhindert eine Delamination.

Die Fasern der Außenschicht sind wie die Fasern der Innenschicht bevorzugt durch Glasfasern dargestellt, dies ist kostengünstig und erhöht die Schadenstoleranz des Konstruktionselementes. Ein weiterer wichtiger Punkt ist, dass Glasfasern elektrisch isolierend sind und insbesondere in dem Fall, dass die Zwischenschicht aus Kohlenstofffasern aufgebaut ist, verhindern die Glasfasern der Außenschicht einen direkten Kontakt der Kohlenstofffasern mit angrenzenden Metallelementen.

Die Anbindung des erfindungsgemäßen Konstruktionselementes an einen Rohbau erfolgt bevorzugt durch mindestens ein, wiederum bevorzugt metallisches Anbindungselement.

Das Anbindungselement kann in die Schichten des Konstruktionselementes integriert sein, z. B. zwischen die Schichten einlaminiert sein (wenn es dadurch zu keiner Kontaktkorrosion kommt) oder an das Konstruktionselement angeklebt sein.

Bevorzugte Ausgestaltungsformen des erfindungsgemäßen Konstruktionselements werden an Hand der folgenden Figuren näher erläutert

Es zeigen:
- Fig. 1,: ein gewölbtes Konstruktionselement aus FVK-Material,
- Fig. 2,: eine Darstellung der Schichten des Konstruktionselements aus Fig. 1
- Fig. 3,: die schematische Darstellung der Integration eines Konstruktionselements in einem Fahrzeugrohbau und
- Fig. 4,: eine dreidimensionale Darstellung der Anbindung eines Konstruktionselementes an einen Fahrzeugrohbau.

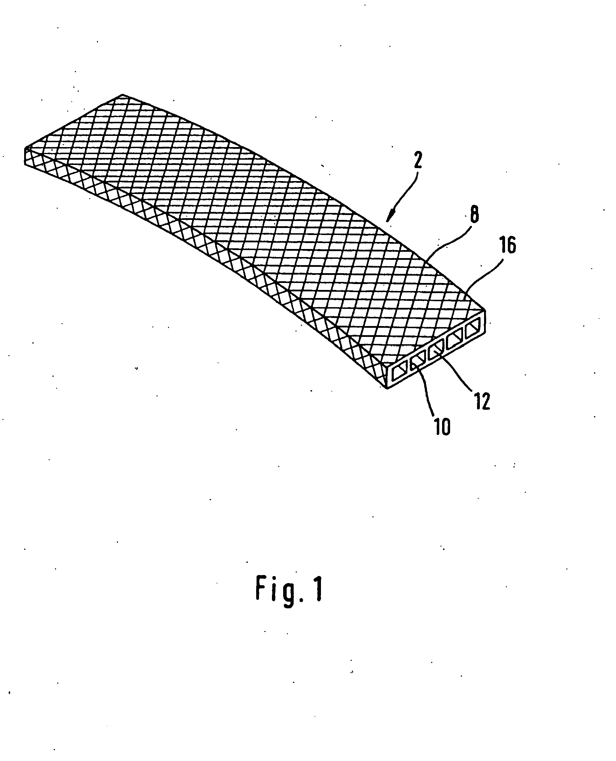

In Fig. 1 ist ein Konstruktionselement dargestellt, das als Dachspriegel eines Fahrzeugrohbaus eingesetzt wird. Das Konstruktionselement weist eine Wölbung in Längsrichtung auf. In einem Kern des Konstruktionselements befinden sich Hohlräume 12, die in Form von Kanälen ausgestaltet sind. Die Hohlräume 12 sind durch Stege 10 von einander getrennt.

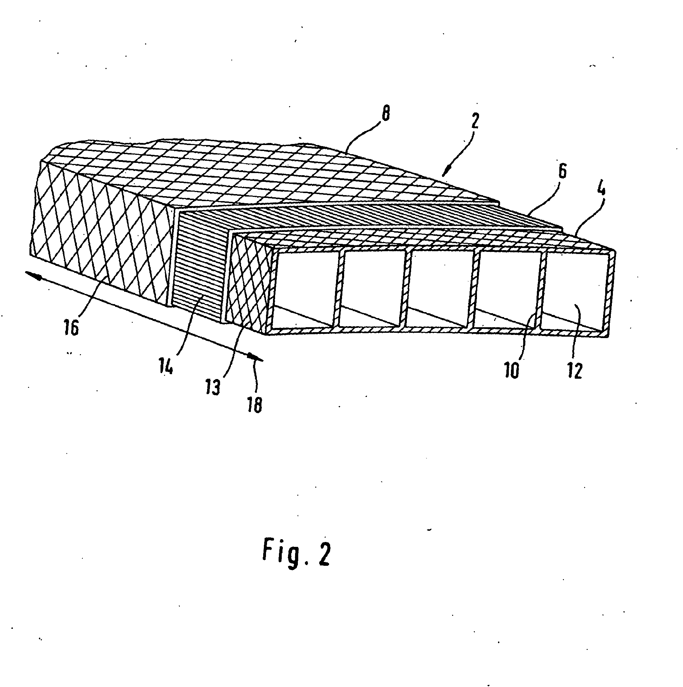

Den Aufbau des Konstruktionselementes 2 zeigt Fig. 2. Die drei erfindungsgemäßen Schichten des Konstruktionselementes sind in Fig. 2 versetzt dargestellt, so dass die wesentlichen Schichten erkennbar sind. Hierbei handelt es sich um die Innenschicht 4, die Zwischenschicht 6 und die Außenschicht 8.

Eine vorteilhafte Herstellungsweise des erfindungsgemäßen Konstruktionselementes wird im Folgenden erläutert:

Die Innenschicht 4 umfasst in Fig. 2 fünf Geflechtschläuche, die nebeneinander angeordnet sind. Hierzu werden die Geflechtschläuche in einem, an sich bekannten Verfahren auf Kunststoff-Folienschläuche gezogen, mehrere überzogene Kunststoff-Folienschläuche nebeneinander werden mit der Zwischenschicht 6 umgeben, dieses Gebinde wird wiederum von einen größeren Geflechtschlauch überzogen, der die Außenschicht 8 bildet. Dieser Verbund wird in ein Formwerkzeug gegeben, die Kunststoff-Folienschläuche im Kern werden aufgeblasen, so dass die Form ausgefüllt wird. Die freien Räume zwischen den Fasern werden unter Druck mit Harz ausgefüllt. Das Harz wird ausgehärtet und die Kunststoff-Folienschläuche entfernt. Im Kern bleiben die Hohlräume 12 stehen. Die durch das Harz miteinander verklebten Geflechtschläuche der Innenschicht 4 bilden die Stege 10.

Das Harz, das eine Matrix des FVK bildet, ist bevorzugt ein Hochtemperaturphenolharz mit einer Erweichungstemperatur Tg von ca. 190° C. Die Geflechtschläuche der Innenschicht weisen ein Kreuzgeflecht auf, das einen zusätzlichen Faseranteil in Richtung der Bauteillängsachse 18 aufweisen kann. Die Fasern 13 der Innenschicht bestehen aus Glasfasern.

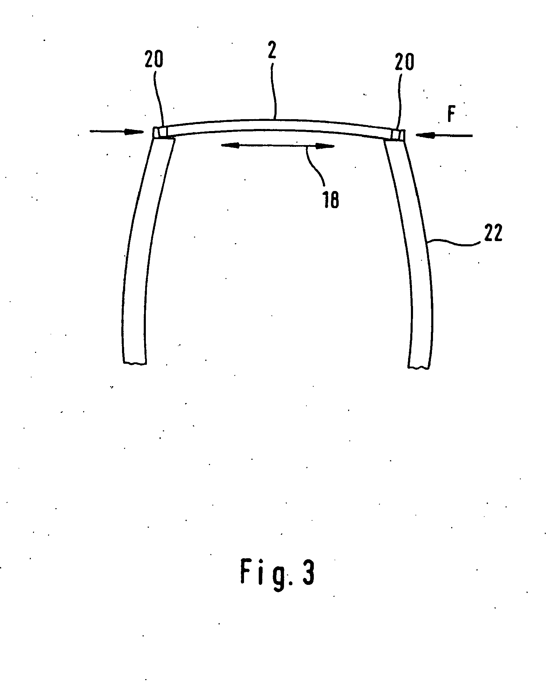

Auf der Innenschicht 4 ist die Zwischenschicht 6 auflaminiert, die aus Kohlenstofffasern 14 besteht. Die Kohlenstofffasern 14 sind entlang der Längsachse 18 ausgerichtet. Dies entspricht der Hauptkraftrichtung, die im Belastungsfall auf das Konstruktionselement wirkt (vgl. Fig. 3). Die Kohlenstofffasern 14 weisen für diesen Belastungsfall die ausreichende Festigkeit auf.

Zur Vermeidung eines plötzlichen (katastrophalen) Sprödbruchs besteht die Außenschicht 8 wiederum vorwiegend aus Glasfasern 16. Die Glasfasern 16 der Außenschicht wie auch die Glasfasern 13 der Innenschicht 4 weisen zwar nicht die Festigkeit der Kohlenstofffasern 14 auf, zeichnen sich jedoch durch eine hohe Dehnung aus. Zudem sind die Fasern 16 der Außenschicht 8 wieder als Geflechtschlauch ausgebildet, so wird eine Delamination der einzelnen Schichten verhindert, die durch die Außenschicht 8 gebündelt zusammengehalten werden.

Die Kombination aus besonders festen und besonders elastischen Fasern, sowie die Anordnung der hochfesten Fasern entlang der Hauptkraftrichtung, führen zu den gewünschten Eigenschaften des Konstruktionselementes 2, die einen Verzicht auf ein Kernmaterial möglich machen. Die Wabenstruktur, die durch die Stege 10 und die Kanäle 12 gebildet werden, trägt zudem zu Verbesserung der Festigkeit bei. Eine weitere vorteilhafte Wirkung weisen die Glasfasern 16 der Außenschicht 8 auf, da sie die, elektrisch leitenden Kohlenstofffasern 14 in der Zwischenschicht 6 von den metallischen Bauteilen abschirmen und somit eine Kontaktkorrosion verhindern.

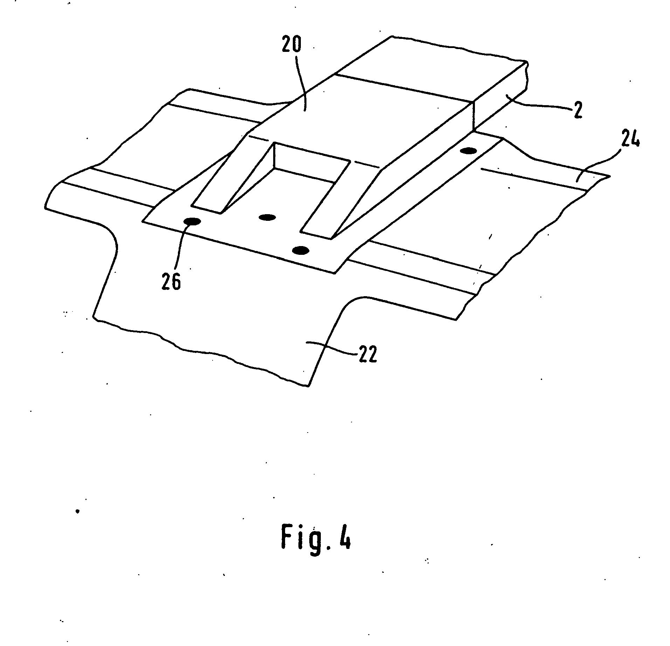

In Fig. 3 ist der Einbau des Erfindungsgemäßen Konstruktionselementes 2 (als Dachspriegel 2) nach den Fig. 1 und 2 schematisch dargestellt. Der Dachspriegel 2 verbindet eine linke und rechte Fahrzeugseite in Höhe der B-Säulen 22 miteinander und verhindert im Falle eines Seitencrashs (angedeutet durch die Kraftlinien F) das Einknicken der B-Säulen 22. Der Dachspriegel 2 ist durch Anbindungselemente 20 an die B-Säulen 22 angeschweißt. Die Anbindungselemente 22 sind wiederum auf den Dachspriegel 2 aufgesteckt und verklebt, so dass sie stoffschlüssig und formschlüssig mit diesem verbunden sind und die Kraft F auf den Dachspriegel 2 übertragen können. Diesen Ausführungen entsprechend zeigt Fig. 4 in dreidimensionaler Darstellung ein Anbindungselement 20, das durch Schweißpunkte 26 am Dachholm 24 in Höhe der B-Säule 22 verschweißt ist.

Grundsätzlich ist das erfindungsgemäße Konstruktionselement auf alle Teile eines Fahrzeugrohbaus oder Fahrwerks anwendbar. Das Konstruktionselement kann auch flächig ausgestalte sein, z. B. in Form einer Trennwand. Die Fasern der Zwischenschicht sind dann entlang der auftretenden Hauptkraftrichtungen orientiert.

Die beschriebene Auswahl der Fasern - Glasfaser für Innen- und Außenschicht, Kohlenstofffasern für Zwischenschicht - ist eine zweckmäßige, in der Praxis bewährte Auswahl. Sie bietet einen guten Kompromiss zwischen Kosten, Masse, Festigkeit und Dehnung für das beschriebene Konstruktionselement. Verändert sich die Gewichtung dieser Kriterien mit den Anforderungen in anderen Bauteilen, sind andere Faserkombinationen zweckmäßig. Sind z. B. die Anforderungen an die Festigkeit geringer, so kann auch die Zwischenschicht aus Glasfasern bestehen. Durch diese Maßnahme werden die Kosten für das Bauteil reduziert. Bei höheren Anforderungen z. B. durch mehrere Belastungsrichtungen kann es zweckmäßig sein, zusätzliche Schichten einzuführen. Dies kann beispielsweise durch eine zweite Zwischenschicht mit Fasern in eine andere Vorzugsrichtung geschehen. Ferner können die Gewebe der einzelnen Schicht aus Mischfaser, z. B. aus Aramid- und Polyethylen-Fasern ausgestaltet sein.

## Patentansprüche

1. Konstruktionselement aus faserverstärktem Kunststoff, das einen mehrschichtigen Aufbau mit unterschiedlichen Fasertypen und unterschiedlichen Faserorientierungen aufweist,
**dadurch gekennzeichnet,**
• **dass** das Konstruktionselement mindestens eine Innenschicht, die einen weitgehend hohlen Kern umschließt,
• mindestens eine Zwischenschicht mit mindestens einer Faser-Vorzugsorientierung in Richtung einer Belastungsachse des Konstruktionselements und
• eine Außenschicht mit elektrisch isolierenden Fasern umfasst .

2. Konstruktionselement nach Anspruch 1,
**dadurch gekennzeichnet,**
**dass** die Innenschicht mindestens einen Geflechtschlauch umfasst.

3. Konstruktionselement nach Anspruch 1 oder 2,
**dadurch gekennzeichnet**
**dass** die Innenschicht mehrere Geflechtschläuche umfasst, die im Querschnitt des Konstruktionselementes Stege bilden.

4. Konstruktionselement nach einem der Ansprüche 1 bis 3,
**dadurch gekennzeichnet,**
**dass** die Geflechtschläuche der Innenschicht Fasern entlang der Längsachse aufweisen.

5. Konstruktionselement nach einem der Ansprüche 1 bis 4,
**dadurch gekennzeichnet,**
**dass** die Innenschicht Glasfasern umfasst.

6. Konstruktionselement nach einem der Ansprüche 1 bis 5,
**dadurch gekennzeichnet ,**
**dass** die Zwischenschicht Kohlenstoff oder Aramidfasern umfasst.

7. Konstruktionselement nach einem der Ansprüche 1 bis 6,
**dadurch gekennzeichnet,**
**dass** die Fasern der Zwischenschicht unidirektional entlang der Längsachse angeordnet sind.

8. Konstruktionselement nach einem der Ansprüche 1 bis 7,
**dadurch gekennzeichnet,**
**dass** die Außenschicht einen Geflechtschlauch umfasst.

9. Konstruktionselement nach einem der Ansprüche 1 bis 8,
**dadurch gekennzeichnet,**
**dass** die Außenschicht Glasfasern umfasst.

10. Konstruktionselement nach einem der Ansprüche 1 bis 9,
**dadurch gekennzeichnet,**
**dass** das Konstruktionselement mindestens ein Anbindungselement zu einem Rohbau aufweist.

11. Konstruktionselement nach einem der Ansprüche 1 bis 10,
**dadurch gekennzeichnet,**
**dass** das Anbindungselement in den Schichten des Konstruktionselementes integriert ist oder an das Konstruktionselement geklebt ist.

## Claims

1. Structural element made from fibre-reinforced plastic, which has a multilayer structure comprising different types of fibres and different fibre orientations, **characterized**
• **in that** the structural element comprises at least one inner layer, which surrounds a substantially hollow core,
• at least one intermediate layer having at least one preferred fibre orientation in the direction of a load axis of the structural element, and
• an outer layer with electrically insulating fibres.

2. Structural element according to Claim 1, **characterized in that** the inner layer comprises at least one braided tube.

3. Structural element according to Claim 1 or 2, **characterized in that** the inner layer comprises a plurality of braided tubes, which form webs in the cross section of the structural element.

4. Structural element according to one of Claims 1 to 3, **characterized in that** the braided tubes of the inner layer have fibres along the longitudinal axis.

5. Structural element according to one of Claims 1 to 4, **characterized in that** the inner layer comprises glass fibres.

6. Structural element according to one of Claims 1 to 5, **characterized in that** the intermediate layer comprises carbon or aramid fibres.

7. Structural element according to one of Claims 1 to 6, **characterized in that** the fibres of the intermediate layer are arranged unidirectionally along the longitudinal axis.

8. Structural element according to one of Claims 1 to 7, **characterized in that** the outer layer comprises a braided tube.

9. Structural element according to one of Claims 1 to 8, **characterized in that** the outer layer comprises glass fibres.

10. Structural element according to one of Claims 1 to 9, **characterized in that** the structural element has at least one element for attaching it to a bodyshell.

11. Structural element according to one of Claims 1 to 10, **characterized in that** the attachment element is integrated in the layers of the structural element or is adhesively bonded to the structural element.

## Revendications

1. Elément de construction en matière synthétique renforcée de fibres, qui présente une structure stratifiée avec différents types de fibres et différentes orientations des fibres,
**caractérisé en ce que**
- l'élément de construction présente au moins une couche intérieure qui entoure une âme essentiellement creuse,
- au moins une couche intermédiaire dont au moins une orientation préférentielle des fibres est alignée sur un axe de sollicitation de l'élément de construction et
- une couche extérieure à fibres électriquement isolantes.

2. Elément de construction selon la revendication 1, **caractérisé en ce que** la couche intérieure comprend au moins un tuyau flexible en treillis.

3. Elément de construction selon les revendications 1 ou 2, **caractérisé en ce que** la couche extérieure comprend plusieurs tuyaux flexibles en treillis qui forment en section transversale des traverses de l'élément de construction.

4. Elément de construction selon les revendications 1 à 3, **caractérisé en ce que** les tuyaux flexibles en treillis de la couche intérieure présentent des fibres le long de leur axe longitudinal.

5. Elément de construction selon l'une des revendications 1 à 4, **caractérisé en ce que** la couche intérieure contient des fibres de verre.

6. Elément de construction selon l'une des revendications 1 à 5, **caractérisé en ce que** la couche intermédiaire contient des fibres de carbone ou d'aramide.

7. Elément de construction selon l'une des revendications 1 à 6, **caractérisé en ce que** les fibres de la couche intermédiaire sont disposées dans une direction alignée sur l'axe longitudinal.

8. Elément de construction selon l'une des revendications 1 à 7, **caractérisé en ce que** la couche extérieure comprend un tuyau flexible en treillis.

9. Elément de construction selon l'une des revendications 1 à 8, **caractérisé en ce que** la couche extérieure contient des fibres de verre.

10. Elément de construction selon l'une des revendications 1 à 9, **caractérisé en ce que** l'élément de construction présente au moins un élément de liaison à un ouvrage brut.

11. Elément de construction selon l'une des revendications 1 à 10, **caractérisé en ce que** l'élément de liaison est intégré dans les couches de l'élément de construction ou est collé sur l'élément de construction.
